# EUROPÄISCHE PATENTSCHRIFT

(11) **EP 0 479 133 B1**
(45) Veröffentlichungstag und Bekanntmachung des Hinweises auf die Patenterteilung: **07.12.1994**
(21) Anmeldenummer: 91116445.7
(22) Anmeldetag: 26.09.1991
(51) Int. Cl.: B62D 21/12

(54) **Fahrgestell für Kraftfahrzeuge oder Fahrzeuganhänger**
Chassis for motor vehicles or vehicle trailers
Chassis pour véhicules à moteur ou remorques pour véhicules

(30) Priorität: 01.10.1990 DE 9013693 U
(43) Veröffentlichungstag der Anmeldung: 08.04.1992
(73) Patentinhaber: AL-KO KOBER AG, D-89359 Kötz (DE)
(72) Erfinder: Wöhrle, Rudolf, W-8873 Ichenhausen, Rieden (DE); Werdich, Anton, W-8878 Bibertal, Anhofen (DE)
(74) Vertreter: Ernicke, Hans-Dieter, Dipl.-Ing.

(56) Entgegenhaltungen:
- DE-A- 2 804 378
- DE-C- 916 152
- GB-A- 997 147
- US-A- 2 718 409

## Beschreibung

Die Erfindung betrifft ein Fahrgestell für Kraftfahrzeuge oder Fahrzeuganhänger mit den Merkmalen im Oberbegriff des Anspruchs 1.

Ein solches Fahrgestell ist aus der DE-A 2 804 378 bekannt. Zur gegenseitigen Befestigung der verschiedenen Blechteile des Fahrgestells, beispielsweise des Achsträgerschildes und des Längsträgers, sind Flanschverbindungen mit napfförmigen, formschlüssig ineinandergreifenden Profilierungen vorgesehen. Die so formschlüssig aneinander geführten und abgestützten Blechteile werden durch eine Schraube, eine Niete oder dergleichen zusammengehalten. Im Zuge der ständigen Bestrebungen nach Gewichtseinsparungen bei Fahrgestellen sollen die verwendeten Bleche, insbesondere der Längsträger, immer dünner werden. In der Praxis ist dem jedoch durch die Flanschverbindungen eine Grenze gesetzt.

Aus der DE-C-916 152 ist ein Kraftfahrzeug-Untergestell bekannt, das einen Querträger und einen kastenförmigen Längsträger besitzt, die einander kreuzen. Im Kreuzungsbereich sind die Bodenwände des Längsträgers aufwärts gekröpft und durch ein im Kröpfungsbereich aufgesetztes Blech verstärkt. Die beiden Blechlagen sind durch Niete miteinander verbunden, die beidseits neben dem Kröpfungsbereich angeordnet sind. An den Nieten sind auch die winkelförmigen Böcke zur Halterung des Querträgers befestigt. Der Querträger reicht mit seiner Oberseite in den Kröpfungsbereich des Längsträgers hinein ohne aber mit dessen Bodenblech in Verbindung zu stehen. Das Bodenblech und das aufgesetzte Verstärkungsblech des Längsträgers sind im wesentlichen gleich dick. Das aufgesetzte Blech hat eine Verstärkungswirkung ähnlich einer Manschette.

Es ist daher Aufgabe der vorliegenden Erfindung, eine Möglichkeit zur weiteren Verringerung der Blechstärken ohne Stabilitätsverlust aufzuzeigen.

Die Erfindung löst diese Aufgabe mit den Merkmalen im Anspruch 1.

Vorteilhafte weitere Ausgestaltungen der Erfindung sind in den Unteransprüchen gekennzeichnet.

Die Flanschverbindung wird durch die erfindungsgemäße Topfscheibe stabilisiert. Die Topfscheibe verstärkt die Formsteifigkeit und Belastbarkeit der Profilierung des zu bewehrenden Blechteiles. Die Blechdicke ist hierdurch nicht mehr von der Stabilität der Profilierung und der Flanschverbindung abhängig und kann verringert werden. Die Blechdicke eines Längsträgers kann somit von den Verbindungsstellen unabhängig auf die Traglasten optimiert werden.
Die Topfscheibe hat eine der Profilierung des Blechteiles angepaßte Form mit einer Ausprägung und einem umgebenden, vorzugsweise ringförmig umlaufenden Flansch. Die Ausprägung sitzt vorzugsweise flächig und dicht auf der Außenseite der Profilierung und verhindert deren Verformung bei Belastung. Die Topfscheibe wirkt insoweit wie eine Manschette.

Die Topfscheibe ist mit dem Blechteil fest verbunden, was vorzugsweise im Flanschbereich erfolgt. Für die Befestigung gibt es die unterschiedlichsten Möglichkeiten, wobei eine Schweißverbindung, insbesondere eine Buckelschweißverbindung, bevorzugt wird. Alternativ kommt auch Punkt- oder Elektrodenschweißen in Betracht.

Die Topfscheibe paßt sich auch der Funktion der Profilierungen und damit der Flanschverbindung an. Sie weist dazu eine fluchtende Öffnung für das Befestigungsmittel auf, das vorzugsweise eine Schraube ist.

Die punktuelle Blechverstärkung durch die Topfscheibe eignet sich für alle Blechteile des Fahrgestells, die durch napfförmige, formschlüssig ineinandergreifende Profilierungen verbunden sind. Bevorzugte Einsatzorte sind die Befestigungsstellen der Einzelholme eines mehrteiligen Längsträgers untereinander, die Befestigungsstellen eines Achsschildes oder die Befestigungsstellen von Flanschplatten zur Abstützung des Aufbaues. Ein besonders bedeutsames Einsatzgebiet sind die Fahrgestelle von Fahrzeuganhängern, da hier die Gewichtsproblematik und der Zwang zur Blechdickenverringerung besonders gravierend sind. Daneben kommen aber auch Fahrgestelle für Kraftfahrzeuge, z.B. Wohnmobile, LKWs mit Sonderaufbauten etc. in Frage.

Die Erfindung ist in den Zeichnungen beispielsweise und schematisch dargestellt. Im einzelnen zeigen:
- Fig. 1:: in Seitenansicht das Fahrgestell eines Fahrzeuganhängers mit einer Flanschverbindung zwischen den Holmen des Längsträgers,
- Fig. 2:: einen Schnitt durch die Verbindungsstelle gemäß Schnittlinie II - II von Fig. und
- Fig. 3 und 4:: eine Topfscheibe in Seitenansicht und Draufsicht.

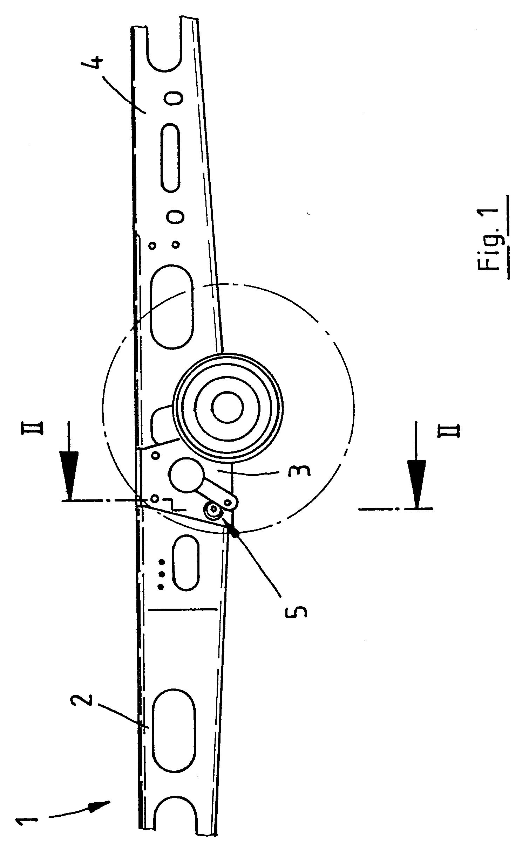

Fig. 1 zeigt das Fahrgestell (1) eines Fahrzeuganhängers in Seitenansicht. Das Fahrgestell (1) besitzt zwei gegabelte Längsträger, von denen in der Seitenansicht nur einer dargestellt ist. Der Längsträger (2) ist geteilt und besteht aus zwei Holmen (4), die oberhalb der Ausnehmung für die Achse (15) miteinander verbunden sind. An dieser Stelle ist auch der Achsschild (3) befestigt. Die Befestigung erfolgt jeweils über eine Flanschverbindung (5).

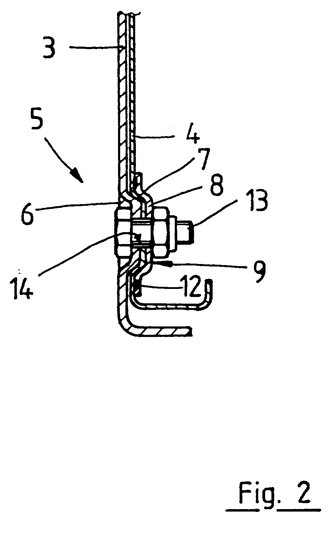

Fig. 2 zeigt diese Flanschverbindung (5) im Schnitt. Die beiden Blechteile (3,4) besitzen napfförmige Profilierungen (6,7), die formschlüssig ineinandergreifen. Die Profilierungen (6,7) haben vorzugsweise das Aussehen eines Kegelstumpfes. Sie liegen mit ihren schrägen Wänden aneinander an und sind im Bodenbereich ein wenig distanziert. Sie werden zusammengehalten durch eine Schraube (13).

Das dickere Blechteil (3) in Gestalt des Achsschildes bedarf aufgrund der Blechdicke keiner Armierung. Die Profilierung (6) ist ausreichend formstabil. Das andere Blechteil (4) in Form des Holmes besitzt jedoch eine geringe Blechdicke von ca. 2 mm, um möglichst viel Gewicht zu sparen. Bei dieser dünnen Wandstärke könnte die Profilierung (7) sich unter Belastung verformen und ihre Stützfunktion verlieren. Die Flanschverbindung (5) wäre dann nicht mehr stabil, so daß die Schraube (13) auf Scherung belastet würde und in absehbarer Zeit bricht.

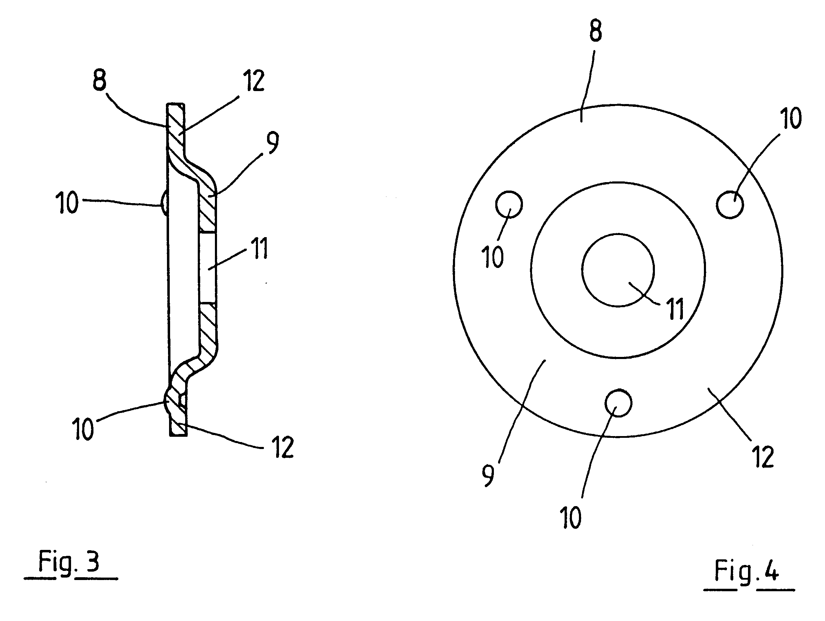

Zur Verstärkung der Profilierung (7) des dünneren Blechteiles (4) ist eine Topfscheibe (8) außenseitig auf der Profilierung angeordnet und am Blechteil (4) befestigt. Wie Fig. 3 und 4 näher verdeutlichen, ist die Topfscheibe (8) in der Form der Profilierung (7) angepaßt und besitzt eine Ausprägung (9), mit der sie flächig und dicht auf der Profilierung (7) aufsitzt.

Die Ausprägung (9) geht am Rand in einen umlaufenden ringförmigen Flansch (12) über, der flächig auf den angrenzenden ebenen Flächen des Blechteiles (4) anliegt. Die Befestigung der Topfscheibe (8) erfolgt im Flanschbereich durch Schweißen.

Wie Fig. 3 und 4 zeigen, besitzt der Flansch (12) drei gleichmäßig über den Umfang verteilte, zum Blechteil (4) weisende Buckel (10) für eine Buckelschweißverbindung. Die Topfscheibe (8) besteht aus einem schweißbaren Stahl und besitzt eine zur Profilierungsverstärkung ausreichende Wanddicke. In der Mitte hat die kreisförmige Topfscheibe (8) eine Öffnung (11), die mit den Öffnungen (14) im Boden der Profilierungen (6,7) fluchtet und eine durchgehende Schrauböffnung bildet.

Die Topfscheibe (8) sitzt fest auf der Profilierung (7) des dünnen Blechteils (4) und wird durch die Schraube (13) zusätzlich angepreßt. Wenn Querkräfte auf die Blechteile (3,4) eingeleitet werden, hält die Topfscheibe (8) die dünnwandige Profilierung (7) in Form und überträgt auch die eingeleiteten Kräfte auf den Steg des dünnwandigen Holms (4). Der Holm (4) ist hierdurch an den belastungskritischen Stellen der Flanschverbindungen (5) gezielt verstärkt und ansonsten auf die weniger kritischen Traglasten dimensioniert.

## Patentansprüche

1. Fahrgestell für Kraftfahrzeuge oder Fahrzeuganhänger mit Blechteilen (3,4), die über napfförmige, formschlüssig ineinandergreifende Profilierungen (6,7) verbunden sind, dadurch **gekennzeichnet**, daß die Blechteile (3,4) verschiedene Dicken aufweisen und daß auf der Profilierung (7) des dünneren Blechteiles (4) eine der Profilierung (7) angepaßte Topfscheibe (8) befestigt ist.

2. Fahrgestell nach Anspruch 1, dadurch **gekennzeichnet**, daß die Topfscheibe (8) eine Ausprägung (9) aufweist, die flächig und dicht auf der Profilierung (7) aufliegt.

3. Fahrgestell nach Anspruch 1 oder 2, dadurch **gekennzeichnet**, daß die Topfscheibe (8) einen die Ausprägung (9) umgebenden Flansch (12) aufweist, der mit dem Blechteil (4) verbunden ist.

4. Fahrgestell nach Anspruch 3, dadurch **gekennzeichnet**, daß der Flansch (12) mit dem Blechteil (4) verschweißt ist.

5. Fahrgestell nach Anspruch 3 oder 4, dadurch **gekennzeichnet**, daß der Flansch (12) mehrere Buckel (10) für eine Buckelschweißverbindung aufweist.

6. Fahrgestell nach einem der Ansprüche 1 bis 5, dadurch **gekennzeichnet**, daß die Topfscheibe (8) im Boden der Ausprägung (9) eine Öffnung (11) aufweist, die mit Öffnungen (14) in den Profilierungen (6,7) fluchtet.

## Claims

1. Chassis for motor vehicles or vehicle trailers, having sheet-metal parts (3, 4) which are connected by way of cup-shaped profiles (6, 7) which mutually engage in form-fitting manner, characterized in that the sheet-metal parts (3, 4) have different thicknesses, and in that a pot-type plate (8) matched to the profile (7) is secured to the profile (7) of the thinner sheet-metal part (4).

2. Chassis according to Claim 1, characterized in that the pot-type plate (8) has a shaped part (9) which bears flat and in tight manner against the profile (7).

3. Chassis according to Claim 1 or 2, characterized in that the pot-type plate (8) has a flange (12) which surrounds the shaped part (9) and which is connected to the sheet-metal part (4).

4. Chassis according to Claim 3, characterized in that the flange (12) is welded to the sheet-metal part (4).

5. Chassis according to Claim 3 or 4, characterized in that the flange (12) has a plurality of projections (10) for a projection welding connection.

6. Chassis according to one of Claims 1 to 5, characterized in that the pot-type plate (8) has in the base of the shaped part (9) an opening (11) which is flush with openings (14) in the profiles (6, 7).

## Revendications

1. Châssis de véhicule automobile ou de remorque de véhicule, comportant des pièces (3, 4) en tôle qui sont réunies par des parties profilées (6, 7) en forme de cuvette, s'emboîtant les unes dans les autres avec complémentarité de forme, caractérisé en ce que les pièces (3, 4) en tôle ont des épaisseurs différentes et que sur la partie profilée (7) de la pièce (4) de tôle la plus mince est fixée une rondelle en cuvette (8) adaptée à la partie profilée (7).

2. Châssis selon la revendication 1, caractérisé en ce que la rondelle en cuvette (8) a une partie emboutie (9) qui s'applique bien à plat sur la partie profilée (7).

3. Châssis selon la revendication 1 ou 2, caractérisé en ce que la rondelle en cuvette (8) comporte une bride (12) entourant le relief embouti (9), et reliée à la pièce (4) en tôle.

4. Châssis selon la revendication 3, caractérisé en ce que la bride (12) est soudée à la pièce (4) en tôle.

5. Châssis selon la revendication 3 ou 4, caractérisé en ce que la bride 12 comporte plusieurs protubérances (10) destinées à une liaison par soudage par bossages.

6. Châssis selon l'une des revendiations 1 à 5, caractérisé en ce que la rondelle (8) en forme de cuvette comporte dans le fond de la partie emboutie (9) une ouverture (11) qui est en alignement avec des ouvertures (14) des parties profilées (6, 7).
